(19)

**Europäisches Patentamt**
**European Patent Office**
**Office européen des brevets**

(11) **EP 4 651 221 A1**

(12) **EUROPEAN PATENT APPLICATION**

(43) Date of publication:
**19.11.2025 Bulletin 2025/47**

(21) Application number: **25168770.3**

(22) Date of filing: **07.04.2025**

(51) International Patent Classification (IPC):
$H01M \ 4/131^{(2010.01)}$    $H01M \ 4/1391^{(2010.01)}$
$H01M \ 4/36^{(2006.01)}$    $H01M \ 4/505^{(2010.01)}$
$H01M \ 4/525^{(2010.01)}$    $H01M \ 4/58^{(2010.01)}$
$H01M \ 10/0525^{(2010.01)}$    $H01M \ 4/02^{(2006.01)}$

(52) Cooperative Patent Classification (CPC):
**H01M 4/525; H01M 4/131; H01M 4/1391;**
**H01M 4/364; H01M 4/505; H01M 4/5825;**
**H01M 10/0525;** H01M 2004/028

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **26.04.2024 KR 20240056149**

(71) Applicant: **SAMSUNG SDI CO., LTD.**
**Yongin-si, Gyeonggi-do 17084 (KR)**

(72) Inventors:
• **KIM, Young-Ki**
  **17084 Yongin-si (KR)**

• **CHOI, Aram**
  **17084 Yongin-si (KR)**
• **KIM, Sangmi**
  **17084 Yongin-si (KR)**
• **DOO, Sungwook**
  **17084 Yongin-si (KR)**
• **KANG, Gwiwoon**
  **17084 Yongin-si (KR)**
• **LEE, Soonrewl**
  **17084 Yongin-si (KR)**

(74) Representative: **Marks & Clerk LLP**
**15 Fetter Lane**
**London EC4A 1BW (GB)**

(54) **POSITIVE ELECTRODE ACTIVE MATERIAL FOR RECHARGEABLE LITHIUM BATTERY, METHOD FOR PREPARING THE SAME, AND RECHARGEABLE LITHIUM BATTERY INCLUDING THE SAME**

(57) A positive electrode active material includes first particles of Chemical Formula 1, and second particles of Chemical Formula 2, where the first particles and the second particles are included in a weight ratio of about 80:20 to about 60:40. Also disclosed are methods for preparing the same, and rechargeable lithium batteries including the same.

FIG. 6

EP 4 651 221 A1

**Description**

**BACKGROUND**

**1. Field**

The present invention relates to a positive electrode active material for a rechargeable lithium battery, a method for preparing the same, and a rechargeable lithium battery including the same. More particularly, the present invention relates to a positive electrode active material including an olivine-based lithium compound, a method for preparing the same, and a rechargeable lithium battery including the same.

**2. Description of the Related Art**

Recently, with the rapid spread of electronic devices that use batteries, such as mobile phones, laptop computers, and electric vehicles, the demand for rechargeable batteries having high energy density and high capacity is rapidly increasing. Accordingly, research and development to improve the performance of rechargeable lithium batteries is being actively conducted.

A rechargeable lithium battery is a battery including a positive electrode and a negative electrode including active materials capable of intercalation and deintercalation of lithium ions, and an electrolyte, and produces electrical energy through the oxidation and reduction reactions if lithium ions are intercalated into and deintercalated from the positive electrode and negative electrode.

**SUMMARY**

The present invention provides a positive electrode active material having high energy density, a high operating voltage and high conductivity (e.g., high electrical conductivity).

The present invention also provides a rechargeable lithium battery having high energy density, a high operating voltage and high low-temperature properties.

According to a first aspect of the present invention there is provided a positive electrode active material including first particles including a compound represented by Chemical Formula 1, and second particles including a compound represented by Chemical Formula 2. The first particles and the second particles are included in a weight ratio of about 80:20 to about 60:40.

<u>Chemical Formula 1</u>        $Li_{a1}Fe_{x1}B_{y1}PO_{4-b1}$

In Chemical Formula 1, $0.8 \leq a1 \leq 1.2$, $0.9 \leq x1 \leq 1.0$, or $0.9 \leq x1 < 1.0$, $0.001 \leq y1 \leq 0.05$, $0 \leq b1 \leq 0.05$ (e.g., $0 < b1 \leq 0.05$), and $x1 + y1 = 1$ are satisfied.

In Chemical Formula 1, B is at least one element selected from the group consisting of Ti, Mg, V and Nb.

<u>Chemical Formula 2</u>        $Li_{a2}Ni_{x2}Co_{y2}Al_{z2}O_{2-b2}$

In Chemical Formula 2, $0.8 \leq a2 \leq 1.2$, $0.8 \leq x2 \leq 0.95$, $0.02 \leq y2 \leq 0.1$, $0.001 \leq z2 \leq 0.1$, $0 \leq b2 \leq 0.05$ (e.g., $0 < b2 \leq 0.05$), and $x2 + y2 + z2 = 1$ are satisfied.

According to a second aspect of the present invention there is provided a method for preparing a positive electrode active material including preparing first particles, preparing second particles, and mixing together the first particles and the second particles in a weight ratio of about 80:20 to about 60:40.

The preparing of the first particles includes mixing together an iron phosphate precursor, a lithium source, a carbon source and a dopant source to form a first mixture, drying the first mixture by spray drying, and baking the dried first mixture.

The preparing of the second particles includes mixing together second secondary particles and second single particles.

The preparing of the second secondary particles includes adding a nickel-based precursor and a lithium source to a solvent and mixing together to form a second secondary particle mixture, drying the second secondary particle mixture by spray drying, and baking the dried second secondary particle mixture.

The preparing of the second single particles includes adding a nickel-based precursor and a lithium source to a solvent and mixing together to form a second single particle mixture, wet grinding the second single particle mixture, drying the second single particle mixture, and baking the dried second single particle mixture.

According to a third aspect of the present invention there is provided a rechargeable lithium battery including the aforementioned positive electrode active material.

At least some of the above and other features of the invention are set out in the claims.

## BRIEF DESCRIPTION OF THE DRAWINGS

The accompanying drawings are included to provide a further understanding of embodiments of the present disclosure, and are incorporated in and constitute a part of this specification. The drawings illustrate embodiments of the present disclosure and, together with the description, serve to explain principles of embodiments of the present disclosure.

FIG. 1 is a simplified conceptual diagram showing a rechargeable lithium battery according to some embodiments of the present disclosure.

FIGS. 2-5 are simplified diagrams showing a rechargeable lithium battery according to an embodiment, where FIG. 2 is a cylindrical battery, FIG. 3 is a prismatic battery, and FIGS. 45 are pouch-type batteries.

FIG. 6 is an enlarged view showing a positive electrode active material layer of a rechargeable lithium battery according to some embodiments of the present disclosure.

FIG. 7A is a pair of scanning electron microscope (SEM) images showing a positive electrode active material according to an embodiment of the present disclosure.

FIG. 7B illustrates a pair of SEM images showing a positive electrode active material according to an embodiment of the present disclosure.

FIG. 7C illustrates a pair of SEM images showing a positive electrode active material according to an embodiment of the present disclosure.

FIG. 8 is a flowchart illustrating a method for preparing a positive electrode active material according to some embodiments of the present disclosure.

## DETAILED DESCRIPTION

In order to sufficiently understand the configuration and effect of embodiments of the present disclosure, some embodiments of the present disclosure will be described with reference to the accompanying drawings. It should be noted, however, that the present disclosure is not limited to the following example embodiments, and may be implemented in various suitable forms. Rather, the example embodiments are provided only to disclose the subject matter of the present disclosure and let those having ordinary skill in the art fully know the scope of the present disclosure.

In this description, it will be understood that, if an element is referred to as being on another element, the element can be directly on the other element or intervening elements may be present between therebetween. In the drawings, thicknesses of some components may be exaggerated to effectively explain the technical contents of the present disclosure. Like reference numerals refer to like elements throughout the specification.

Unless otherwise specially noted in this description, the expression of a singular form may include the expression of a plural form. In embodiments, unless otherwise specially noted, the phrase "A or B" may indicate "A but not B", "B but not A", and "A and B". The terms "comprises/includes" and/or "comprising/including" used in this description do not exclude the presence or addition of one or more other components.

As used herein, the term "combination thereof" may refer to a mixture, a stack, a composite, a copolymer, an alloy, a blend, and/or a reaction product.

Unless otherwise specially defined in this description, a particle diameter may be an average particle diameter. In embodiments, a particle diameter means an average particle diameter ($D_{50}$), which refers to the diameter of particles at a cumulative volume of about 50 vol% in particle size distribution. The average particle diameter ($D_{50}$) may be measured by a suitable method generally used in the art, for example, by a particle size analyzer, and/or by using a transmission electron microscope (TEM) image and/or a scanning electron microscope (SEM) image. In embodiments, the average particle diameter may be measured by a measurement device using dynamic light-scattering, wherein data analysis is conducted to count the number of particles for each particle size range, and an average particle diameter ($D_{50}$) value may then be obtained through calculation. In embodiments, a laser scattering method may be utilized to measure the average particle diameter. In the laser scattering method, target particles are dispersed in a dispersion medium, then, introduced into a commercial laser diffraction particle-diameter measurement instrument (e.g., MT3000 of Microtrac), and irradiated to ultrasonic waves of about 28 kHz at an output of about 60 W, and the average particle diameter ($D_{50}$) based on about 50% of particle diameter distribution may be calculated in the measurement instrument.

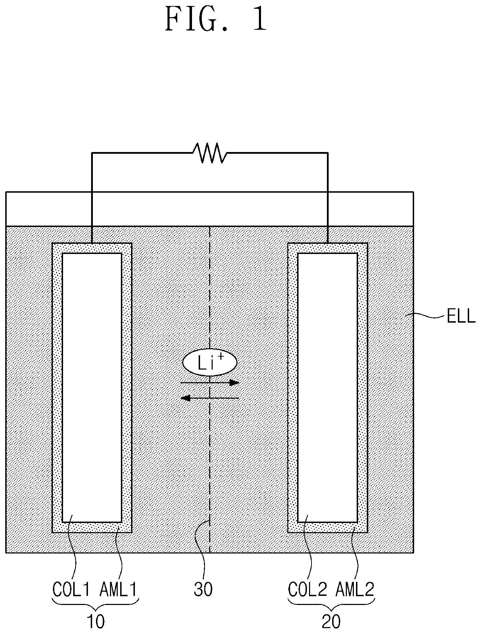

FIG. 1 is a simplified conceptual diagram of a rechargeable lithium battery according to some embodiments of the present disclosure. Referring to FIG. 1, the rechargeable lithium battery may include a positive electrode 10, a negative electrode 20, a separator 30, and an electrolyte solution ELL.

The positive electrode 10 and the negative electrode 20 may be spaced apart from each other by the separator 30. The separator 30 may be between the positive electrode 10 and the negative electrode 20. The positive electrode 10, the negative electrode 20 and the separator 30 may be in contact with the electrolyte solution ELL. The positive electrode 10, the negative electrode 20 and the separator 30 may be immersed in the electrolyte solution ELL.

The electrolyte solution ELL may be a medium that transfers lithium ions between the positive electrode 10 and the negative electrode 20. In the electrolyte solution ELL, the lithium ions may move through the separator 30 toward the positive electrode 10 or the negative electrode 20.

**Positive Electrode 10**

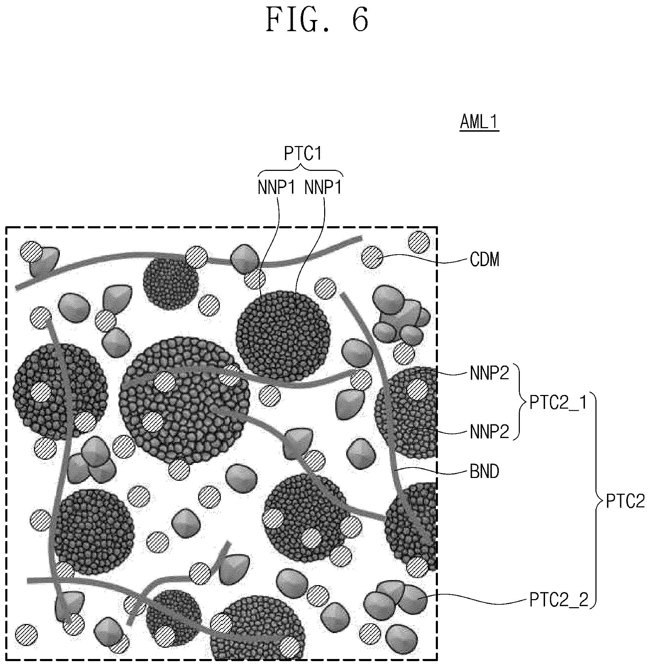

The positive electrode 10 for a rechargeable lithium battery may include a current collector COL1 and a positive electrode active material layer AML1 on the current collector COL1. The positive electrode active material layer AML1 may include a positive electrode active material and may further include a binder and/or a conductive material (e.g., an electrically conductive material). Detailed description on the positive electrode active material layer AML1 according to some embodiments of the present disclosure will be further explained with reference to FIG. 6. Al may be used as the current collector COL1, but is not limited thereto.

**Negative Electrode 20**

The negative electrode 20 for a rechargeable lithium battery may include a current collector COL2, and a negative electrode active material layer AML2 on the current collector COL2. The negative electrode active material layer AML2 may include a negative electrode active material and may further include a binder and/or a conductive material (e.g., an electrically conductive material).

For example, the negative electrode active material layer AML2 may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles well to each other and also to attach the negative electrode active material well to the current collector COL2. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from a styrene-butadiene rubber, a (meth)acrylated styrene-butadiene rubber, a (meth)acrylonitrile-butadiene rubber, a (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If an aqueous binder is used as the negative electrode binder, a cellulose-based compound capable of imparting or increasing viscosity may be further included. The cellulose-based compound may include at least one of carboxymethyl cellulose, hydroxypropylmethyl cellulose, methyl cellulose, or an alkali metal salt thereof. The alkali metal may include Na, K, and/or Li.

The dry binder may be a polymer material that is capable of being fibrous (e.g., capable of being fibrillized). For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart conductivity (e.g., electrical conductivity) to the electrode. Any suitable material that does not cause chemical change (e.g., does not cause an undesirable chemical change to the rechargeable lithium battery) and is an electron conductive material may be used in the battery. Examples of the conductive material may include: a carbon-based material such as natural graphite, artificial graphite, carbon black, acetylene black, Ketjen black, a carbon fiber, a carbon nanofiber, and/or carbon nanotube; a metal-based material including copper, nickel, aluminium, silver, etc., in a form of a metal powder and/or a metal fiber; a conductive polymer (e.g., an electrically conductive polymer) such as a polyphenylene derivative; or a mixture thereof.

The current collector COL2 may use a copper foil, a nickel foil, a stainless steel foil, a titanium foil, a nickel foam, a copper foam, a polymer substrate coated with a conductive metal (e.g., an electrically conductive metal), or a combination thereof.

**Negative Electrode Active Material**

The negative electrode active material in the negative electrode active material layer AML2 may include a material that reversibly intercalates/deintercalates lithium ions, a lithium metal, a lithium metal alloy, a material capable of doping into and de-doping from lithium, and/or a transition metal oxide.

The material that reversibly intercalates/deintercalates lithium ions may include a carbon-based negative electrode active material, for example, crystalline carbon, amorphous carbon or a combination thereof. The crystalline carbon may be graphite such as non-shaped, sheet-shaped, flake-shaped, sphere-shaped, and/or fiber-shaped natural graphite and/or artificial graphite. The amorphous carbon may be a soft carbon, a hard carbon, a mesophase pitch carbonization product, calcined coke, and/or the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping into and de-doping from lithium may be a Si-based negative electrode active material and/or a Sn-based negative electrode active material. The Si-based negative electrode active material may include silicon, a silicon-carbon composite, $SiO_x$ ($0 < x < 2$), a Si-Q alloy (where Q is selected from an alkali metal, an alkaline earth metal, a Group 13 element, a Group 14 element (except for Si), a Group 15 element, a Group 16 element, a transition metal, a rare-earth element, and a combination thereof), or a combination thereof. The Sn-based negative electrode active material may include Sn, $SnO_2$, a Sn-based alloy, or a combination thereof.

The silicon-carbon composite may be a composite of silicon and amorphous carbon. According to an embodiment, the silicon-carbon composite may be in a form of silicon particles and amorphous carbon coated on the surface of the silicon particles. For example, the silicon-carbon composite may include a secondary particle (core), in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material and/or the Sn-based negative electrode active material may be used in combination with a carbon-based negative electrode active material.

## Separator 30

Depending on the type (or kind) of the rechargeable lithium battery, the separator 30 may be present between the positive electrode 10 and the negative electrode 20. The separator 30 may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator 30 may include a porous substrate and a coating layer including an organic material, an inorganic material, or a combination thereof on one or both surfaces of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, a cyclic olefin copolymer, polyphenylene sulfide, polyethylene naphthalate, a glass fiber, and polytetrafluoroethylene (e.g. TEFLON,), or a copolymer or mixture of two or more thereof.

The organic material may include a polyvinylidene fluoride-based polymer and/or a (meth)acrylic polymer.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed together in one coating layer, or a coating layer including an organic material and a coating layer including an inorganic material may be stacked.

## Electrolyte Solution ELL

The electrolyte solution ELL for a rechargeable lithium battery may include a non-aqueous organic solvent and a lithium salt.

The non-aqueous organic solvent may serve as a medium that transmits ions taking part in the electrochemical reaction of a battery.

The non-aqueous organic solvent may be a carbonate-based, ester-based, ether-based, ketone-based, and/or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like.

The ester-based solvent may include methyl acetate, ethyl acetate, n-propyl acetate, dimethyl acetate, methyl propionate, ethyl propionate, decanolide, mevalonolactone, valerolactone, caprolactone, and/or the like.

The ether-based solvent may include dibutyl ether, tetraethylene glycol dimethyl ether (tetraglyme), bis(2-methoxyethyl) ether (diglyme), dimethoxyethane, 2-methyltetrahydrofuran, 2,5-dimethyltetrahydrofuran, tetrahydrofuran, and/or the like. In embodiments, the ketone-based solvent may include cyclohexanone, and/or the like. The alcohol-based solvent may include ethanol, isopropyl alcohol, and/or the like and the aprotic solvent may include nitriles such as R-CN (wherein R is a C2 to C20 linear, branched, or cyclic hydrocarbon group, a double bond, an aromatic ring, and/or an ether bond), and/or the like; amides such as dimethylformamide; dioxolanes such as 1,3-dioxolane, 1,4-dioxolane, and/or the like; sulfolanes, and/or the like.

The non-aqueous organic solvents may be used alone or in combination of two or more.

In embodiments, if using a carbonate-based solvent, a cyclic carbonate and a chain carbonate may be mixed together and used, and the cyclic carbonate and the chain carbonate may be mixed together in a volume ratio of about 1:1 to about 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_3)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluorobis(oxalato)phosphate (LiDFBOP), and lithium bis(oxalato)borate (LiBOB).

**Rechargeable Lithium Battery**

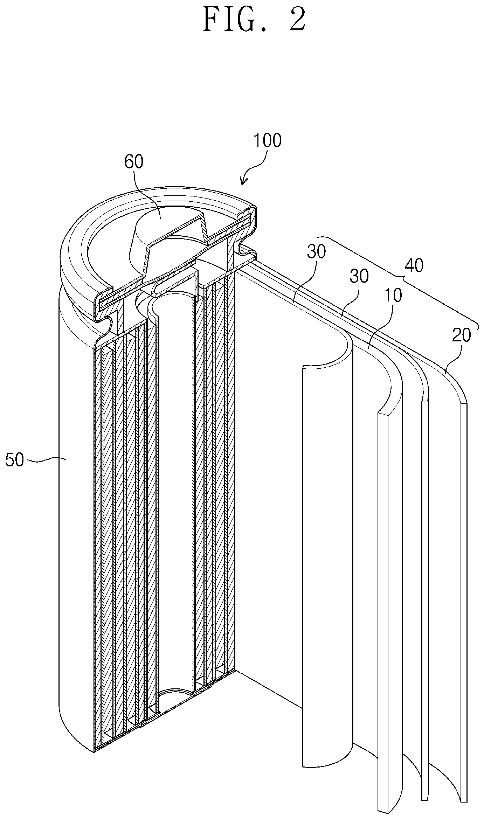

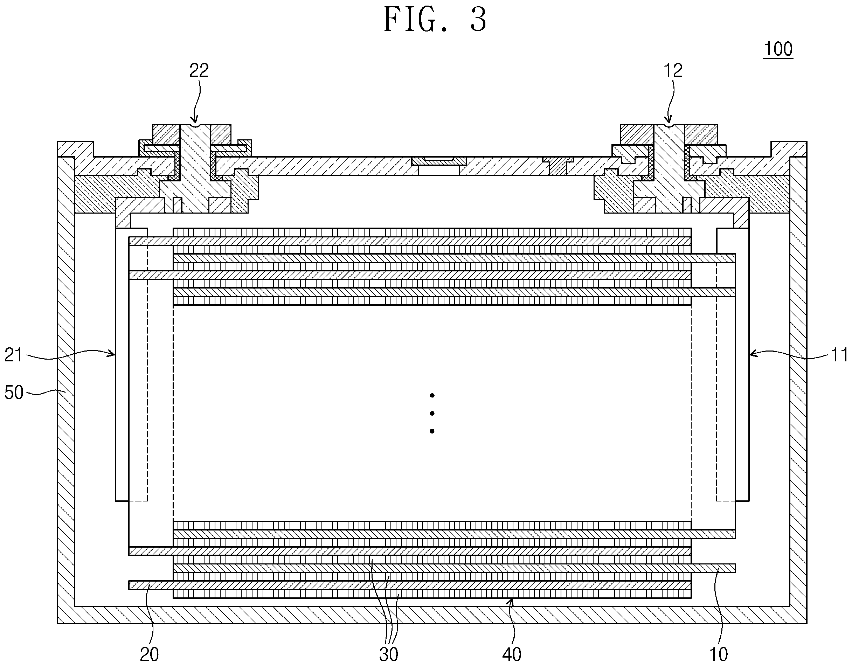

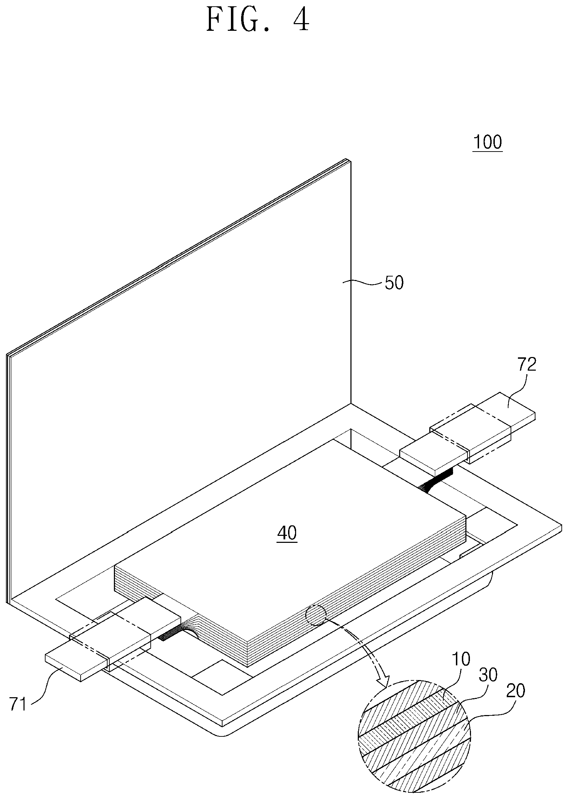

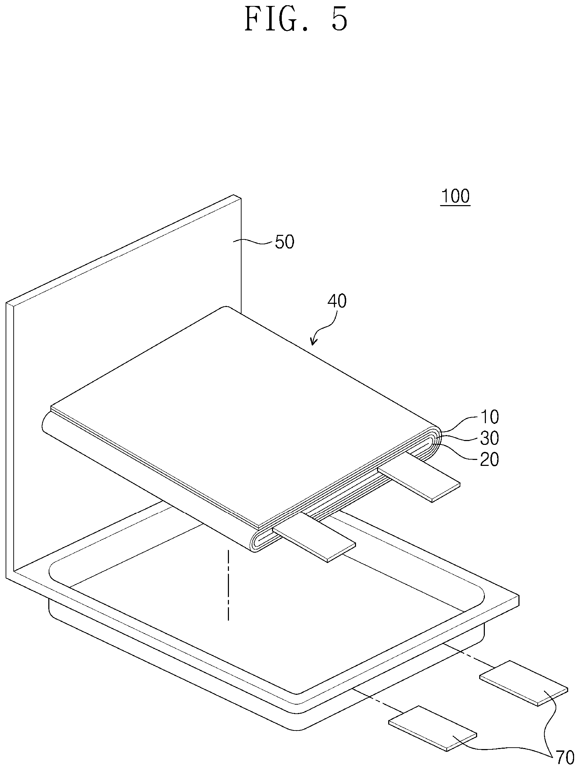

The rechargeable lithium battery may be classified into cylindrical, prismatic, pouch, or coin-type batteries, and/or the like depending on their shape. FIGS. 2-5 are schematic views illustrating a rechargeable lithium battery according to an embodiment. FIG. 2 shows a cylindrical battery, FIG. 3 shows a prismatic battery, and FIGS. 4-5 show pouch-type batteries. Referring to FIGS. 2-5, the rechargeable lithium battery 100 may include an electrode assembly 40 including a separator 30 between a positive electrode 10 and a negative electrode 20, and a case 50 in which the electrode assembly 40 is included. The positive electrode 10, the negative electrode 20, and the separator 30 may be impregnated with an electrolyte solution. The rechargeable lithium battery 100 may include a sealing member 60 that seals the case 50, as shown in FIG. 2. In FIG. 3, the rechargeable lithium battery 100 may include a positive lead tab 11, a positive terminal 12, a negative lead tab 21, and a negative terminal 22. As shown in FIGS. 4-5, the rechargeable lithium battery 100 may include an electrode tab 70 (FIG. 5), which may be, for example, a positive electrode tab 71 and a negative electrode tab 72 (FIG. 4) that serve as an electrical path for inducing the current formed in the electrode assembly 40 to the outside.

The rechargeable lithium battery according to an embodiment may be applied to automobiles, mobile phones, and/or various suitable types (or kinds) of electric devices, as non-limiting examples.

FIG. 6 illustrates an enlarged view showing a positive electrode active material layer of a rechargeable lithium battery according to some embodiments of the present disclosure. Referring to FIG. 6, as discussed above, the positive electrode active material layer AML1 (see FIG. 1) may include a first particle PTC1, a second particle PTC2, a conductive material CDM (e.g., an electrically conductive material CDM), and a binder BND. A plurality of the first particles PTC1 and a plurality of the second particles PTC2 constitute a positive electrode active material according to the present invention.

The positive electrode active material layer AML1 may further include an additive that may serve as a sacrificial positive electrode.

The content of the positive electrode active material (PTC1 and PTC2) in the positive electrode active material layer AML1 may range from about 90 wt% to about 99 wt% relative to about 100 wt% of the positive electrode active material layer AML1. Each of the contents of the binder BND and the conductive material CDM may be about 0.5 wt% to about 5 wt% relative to about 100 wt% of the positive electrode active material layer AML1.

The binder BND may combine (e.g., adhere together) the first particles PTC1, the second particles PTC2, and the conductive material CDM with each other. For example, the binder BND may include at least one selected from the group consisting of polyvinyl alcohol, carboxymethyl cellulose, hydroxypropyl cellulose, diacetyl cellulose, polyvinyl chloride, carboxylated polyvinyl chloride, polyvinyl fluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, and nylon, but the present disclosure is not limited thereto.

The conductive material CDM may be used to improve conductivity (e.g., electrical conductivity) of the positive electrode active material layer AML1. Any suitable conductive material that does not cause a chemical change (e.g., that does not cause an undesirable chemical change) of the positive electrode active material layer AML1 may be used without limitation as the conductive material CDM. For example, the conductive material CDM may include: a carbon-based material such as natural graphite, artificial graphite, carbon black, acetylene black, Ketjen black, carbon fiber, carbon nano-fiber, and/or carbon nano-tube; a metal-based material including copper, nickel, aluminium, silver and/or the like and having a metal powder and/or metal fiber form; a conductive polymer (e.g., an electrically conductive polymer) such as a polyphenylene derivative; or a mixture thereof.

Hereinafter, each of the first particle PTC1 and the second particle PTC2 will be explained in more detail.

**First Particle PTC1**

Referring to FIG. 6, the first particle PTC1 according to embodiments of the present disclosure may have a polycrystal form and may include a secondary particle in which at least two first primary particles NNP1 are agglomerated. In embodiments, one first particle PTC1 may include a plurality of first primary particles NNP1 agglomerated with each other. The first particle PTC1 may have a spherical or elliptical shape (e.g., a generally spherical shape or a generally elliptical shape).

The first particles PTC1 in a polycrystal form may be provided in various suitable sizes. For example, the average particle diameter of the first particles PTC1 may be about 3 $\mu$m to about 10 $\mu$m. In embodiments, the average particle diameter of the first particles PTC1 may be about 3 $\mu$m to about 7 $\mu$m, or about 4 $\mu$m to about 6 $\mu$m.

In an embodiment, the average particle diameter may be measured by a particle size analyzer. The average particle diameter may mean the diameter of particles at an accumulated volume of about 50 vol% ($D_{50}$) in particle size distribution.

The minimum particle diameter of the first particles PTC1 in a polycrystal form, for example, the particle diameter of the first primary particles NNP1 may be about 50 nm to about 200 nm.

In an embodiment, the minimum particle diameter, for example, the particle diameter of the first primary particles NNP1 may mean a diameter measured by randomly selecting about 30 first primary particles NNP1 on an electron microscope image of the first particles PTC1.

The maximum particle diameter ($D_{max}$) of the first particles PTC1 in a polycrystal form may be about 10 $\mu$m to about 30 $\mu$m.

In an embodiment, the first particle PTC1 may include a first coating layer on the surface thereof. The first coating layer may cover the entire surface of the first particle PTC1 or may cover a portion of the surface of the first particle PTC1. For example, the first coating layer may include carbon and/or a carbon-containing compound. The first coating layer may further include at least one selected from the group consisting of a titanium-containing compound, a magnesium-containing compound, a vanadium-containing compound, and a niobium-containing compound. The metal-containing compound such as the titanium-containing compound, the magnesium-containing compound, the vanadium-containing compound, and the niobium-containing compound, may be, for example, a metal oxide, a metal hydroxide, a metal carbonate, a synthesized compound thereof, or a mixture thereof. The metal-containing compound may further include other metal and/or non-metal elements. For example, the metal-containing compound may further include lithium. The first particle PTC1 may show improved structural stability and improved electrical conductivity by the first coating layer.

In an embodiment, the first particle PTC1 may further include a grain boundary coating layer on the surface of each of the first primary particles NNP1. The grain boundary coating layer may be present in the first particle PTC1. The grain boundary coating layer may be formed along the interface between the first primary particles NNP1 inside the first particle PTC1. In embodiments, the grain boundary coating layer may mean a material coated on the grain boundary in the first particle PTC1. The grain boundary coating layer may include carbon and/or a carbon-containing compound. The grain boundary coating layer may further include at least one selected from the group consisting of a titanium-containing compound, a magnesium-containing compound, a vanadium-containing compound, and a niobium-containing compound.

The interior of the above-described first particle PTC1 may mean the entire interior of the first particle PTC1 excluding the surface of the first particle PTC1. For example, the interior of the first particle PTC1 may mean an entire interior from a depth of about 10 nm from the surface of the first particle PTC1, or a region from a depth of about 10 nm to a depth of about 2 $\mu$m.

The first particle PTC1 may further include carbon derived from the first coating layer and/or first grain boundary coating layer. The carbon element content in the first particle PTC1 may be about 1.5 wt% to about 10 wt%, about 1.5 wt% to about 3 wt%, or about 1.5 wt% to about 2.5 wt%.

When the first particle PTC1 further includes the grain boundary coating part, structural stability may be reinforced, and a uniform (e.g., substantially uniform) coating layer may be formed on the surface of the first particle PTC1. In embodiments, when the first particle PTC1 further includes the grain boundary coating part, the electrical conductivity of the first particle PTC1 may be further improved.

In the first particle PTC1 in a polycrystal form, the first primary particles NNP1 may be closely agglomerated, and may show the properties as follows. The first particle PTC1 may have a spherical shape or an elliptical shape (e.g., a generally spherical shape or a generally elliptical shape). The porosity of the first particles PTC1 may be about 20% to about 40%, or about 20% to about 30%. Here, porosity (n) may be defined as the pore volume ($V_p$) divided by the total

volume ($V_t$) of a particle, or $n = \frac{V_p}{V_t}$ The span value of the first particles PTC1 analyzed by a particle size analyzer may be about 0.3 to about 0.75. In this specification, the span value may be defined by the equation of $(D_{90}-D_{10})/D_{50}$. $D_{10}$, $D_{50}$ and $D_{90}$ may refer to the particle size of the particles with cumulative volumes of 10 vol%, 50 vol% and 90 vol%, respectively, in the particle size distribution.

If the first particle PTC1 is a secondary particle in a polycrystal form, the average particle diameter may be large, and a relatively small amount of a binder BND may be required or utilized to attach the first particles PTC1 to a current collector COL1 (see FIG. 1). For example, the content of the binder BND may be about 0.5 wt% to about 3 wt% on the basis of about 100 wt% of a positive electrode active material layer AML1. If the binder content included in the positive electrode active material layer AML1 is reduced, the active material content may be increased correspondingly, thereby improving the capacity and energy density of a battery. In embodiments, the electrical conductivity of the positive electrode may be improved by reducing the binder content that increases resistance (e.g., electrical resistance).

The first particle PTC1 includes an olivine-based lithium compound represented by Chemical Formula 1 below.

Chemical Formula 1          $Li_{a1}Fe_{x1}B_{y1}PO_{4-b1}$

In Chemical Formula 1, $0.8 \leq a1 \leq 1.2$, $0.9 \leq x1 \leq 1.0$, or about $0.9 \leq x1 < 1.0$, $0.001 \leq y1 \leq 0.05$, $0 \leq b1 \leq 0.05$ (e.g., $0 < b1 \leq 0.05$), and $x1 + y1 = 1$ are satisfied. B is at least one element selected from the group consisting of Ti, Mg, V and Nb. B is a dopant doped in the first particle PTC1. For example, B may include Ti.

The doped content of Ti may be about 500 ppm to about 3000 ppm. Through the Ti-doping, the size of the first primary particles NNP1 may be controlled uniform (e.g., substantially uniform) and the charge and discharge efficiency, low-temperature properties and lifetime characteristics of a rechargeable lithium battery may be improved. In embodiments, through the Ti-doping, the crystal structure of the positive electrode active material may be stabilized and the lifetime characteristics of a battery may be improved.

**Second Particle PTC2**

Referring to FIG. 6 again, a second particle PTC2 may have two particle forms.

The second particle PTC2 may include a second secondary particle PTC2_1 and a second single particle PTC2_2. In embodiments, the second particles PTC2 may have bimodal particle diameter distribution.

The second secondary particle PTC2_1 has a polycrystal form and may have a form in which at least two second primary particles NNP2 are agglomerated. In embodiments, one second secondary particle PTC2_1 may include a plurality of second primary particles NNP2 agglomerated with each other. The second secondary particle PTC2_1 may have a spherical or elliptical shape (e.g., a generally spherical shape or a generally elliptical shape).

The second secondary particles PTC2_1 in a polycrystal form may be provided in various suitable sizes. For example, the average particle diameter of the second secondary particles PTC2_1 may be about 10 μm to about 18 μm. For example, the average particle diameter of the second secondary particles PTC2_1 may be about 12 μm to about 16 μm, about 13 μm to about 15 μm.

In an embodiment, the average particle diameter may be measured using a particle size analyzer. The average particle diameter may mean a diameter ($D_{50}$) of particles at an accumulated volume of about 50 vol% in particle size distribution.

The minimum particle diameter of the second secondary particles PTC2_1 in a polycrystal form, for example, the diameter of the second primary particles NNP2 may be about 50 nm to about 200 nm.

In an embodiment, the minimum particle diameter, for example, the particle diameter of the second primary particle NNP2 may mean a diameter measured by randomly selecting about 30 second primary particles NNP2 in the electron microscope image of the second secondary particles PTC2_1.

In an embodiment, the second secondary particle PTC2_1 may include a second coating layer on the surface thereof. By including the second coating layer, the second secondary particle PTC2_1 may effectively suppress or reduce structural collapse due to repeated charging and discharging. Accordingly, the lifetime characteristics of a rechargeable battery may be improved.

The second coating layer may include a cobalt-containing compound, an aluminium-containing compound, or a combination thereof. The metal-containing compound in the second coating layer may be, for example, a metal oxide, a metal hydroxide, a metal carbonate, a synthesized compound thereof, or a mixture thereof. The metal-containing compound may further include other metal and/or nonmetal elements. For example, the second coating layer may further include lithium, manganese, and/or nickel.

In an embodiment, the second secondary particles PTC2_1 may further include a second grain boundary coating layer on each surface of the second primary particles NNP2. The second grain boundary coating layer may be present in the second secondary particle PTC2_1. The second grain boundary coating layer may be formed along the interface between the second primary particles NNP2 inside the second secondary particle PTC2_1. In embodiments, the second grain boundary coating layer may mean a material coated on the grain boundary in the second secondary particle PTC2_1. The second grain boundary coating layer may include cobalt and/or a compound including cobalt.

The interior of the above-described second secondary particle PTC2_1 may mean the entire interior of the second secondary particle PTC2_1 excluding the surface of the second secondary particle PTC2_1. For example, the interior of the second secondary particle PTC2_1 may mean an entire interior from a depth of about 10 nm from the surface of the second secondary particle PTC2_1, or a region from a depth of about 10 nm to a depth of about 2 $\mu$m.

The second secondary particle PTC2_1 may further include cobalt derived from the second coating layer and/or second grain boundary coating layer. The cobalt element content in the second secondary particle PTC2_1 may be about 1 wt% to about 5 wt%, about 2 wt% to about 4 wt%, or about 2.5 wt% to about 3.5 wt%.

Because the second secondary particle PTC2_1 further includes the grain boundary coating part, structural stability may be reinforced, and a uniform (e.g., substantially uniform) coating layer may be formed on the surface of the second secondary particle PTC2_1. In embodiments, because the second secondary particle PTC2_1 further includes the grain boundary coating part, the electrical conductivity of the second secondary particle PTC2_1 may be further improved.

The second single particle PTC2_2 may have a single particle form. In the present description, the single particle may mean a sole particle that does not have a grain boundary inside. The single particle has a morphology phase, and may mean a single particle, a monolith structure, a monolithic structure, or a non-agglomerated particle in which the particles exist as an independent phase that are not agglomerated. For example, the single particle may be a single crystal. In embodiments, the single particle may be a particle including several crystals. The single particle may be a solely separated form. In embodiments, the single particle may be in the form of 2 to 100 single particles attached to each other.

The second single particle PTC2_2 in a single particle form may be provided in various suitable sizes. For example, the average particle diameter of the second single particles PTC2_2 may be about 3 $\mu$m to about 5 $\mu$m.

In an embodiment, the average particle diameter may be measured using a particle size analyzer. The average particle diameter may mean a diameter ($D_{50}$) of particles at an accumulated volume of about 50 vol% in particle size distribution.

In an embodiment, the second single particle PTC2_2 may include a second coating layer on the surface thereof. The second coating layer on the surface of the second single particle PTC2_2 may be substantially the same as the second coating layer on the surface of the second secondary particle PTC2_1.

The second particle PTC2 includes a lithium nickel-based composite oxide as a nickel-based active material. For example, the second particle PTC2 may include a nickel-based positive electrode active material including the high content of nickel. The nickel-based positive electrode active material may achieve high capacity and high performance.

The second particle PTC2 includes a lithium nickel-based composite oxide having a layered structure, represented by Chemical Formula 2 below.

$$\text{Chemical Formula 2} \qquad Li_{a2}Ni_{x2}Co_{y2}Al_{z2}O_{2-b2}$$

In Chemical Formula 2, $0.8 \leq a2 \leq 1.2$, $0.8 \leq x2 \leq 0.95$, $0.02 \leq y2 \leq 0.1$, $0.001 \leq z2 \leq 0.1$, $0 \leq b2 \leq 0.05$ (e.g., $0 < b2 \leq 0.05$), and $x2 + y2 + z2 = 1$ are satisfied.

In embodiments of the second secondary particle PTC2_1 having a polycrystal form, in Chemical Formula 2, $0.02 \leq y2 \leq 0.1$ or $0.09 \leq y2 \leq 0.1$, and $0.001 \leq z2 \leq 0.1$ or $0.001 \leq z2 \leq 0.03$, and $3 \leq y2/z2 \leq 100$ or $3 < y2/z2 < 100$, may be satisfied, and the Al content of the second secondary particle PTC2_1 may be about 3 mol% or less on the basis of about 100 mol% of the second secondary particle PTC2_1.

In an embodiment, the second single particle PTC2_2 having a single particle form may include a lithium nickel-based composite oxide having a layered structure, represented by Chemical Formula 2-1 below.

$$\text{Chemical Formula 2-1} \qquad Li_{a3}Ni_{x3}Co_{y3}Al_{z3}Mn_{c3}O_{2-b3}$$

In Chemical Formula 2-1, $0.9 \leq a3 \leq 1.1$, $0.8 \leq x3 \leq 0.97$, $0.1 \leq y3 \leq 0.3$, $0.001 \leq z3 \leq 0.05$, $0.01 < c3 < 0.1$, $0 \leq b3 \leq 0.1$ (e.g., $0 < b3 \leq 0.1$), and $x3 + y3 + z3 + c3 = 1$ may be satisfied.

The second particle PTC2 according to some embodiments of the present disclosure will be explained in more detail with reference to FIG. 6 again. The second particle PTC2 of the present disclosure may include the second secondary particle PTC2_1 and the second single particle PTC2_2. In the second particles PTC2 of the present disclosure, the second secondary particles PTC2_1 and the second single particles PTC2_2 may be mixed together in a weight ratio of about 80:20 to about 60:40 on the basis of about 100 by a weight ratio of the second particles. In embodiments, the second secondary particles PTC2_1 and the second single particles PTC2_2 may be mixed together in a weight ratio of about 75:25 to about 65:35.

If the mixing ratio of the second secondary particles PTC2_1 and the second single particles PTC2_2 of the second particles PTC2 is within the above range, the second single particles PTC2_2 having a small size may fill between the second secondary particles PTC2_1 having a large size to increase the pellet density and capacity per volume (mAh/cc) of the positive electrode active material and improve lifetime characteristics under a high voltage and low temperature.

In an embodiment, the mixing ratio of the second secondary particles PTC2_1 and the second single particles PTC2_2 may be controlled so that the weight of Ni included in the second secondary particles PTC2_1 is equal to or greater than the weight of Ni included in the second single particles PTC2_2. In embodiments, though repeating charging and discharging at a high voltage, the positive electrode active material may maintain a very stable structure, and may exhibit improved capacity, resistance (e.g., electrical resistance) and lifetime characteristics all at room temperature/high temperature. In an embodiment, the weight of Ni included in the second secondary particles PTC2_1 may be 5 times or less the weight of Ni included in the second single particles PTC2_2.

The positive electrode active material according to some embodiments of the present disclosure will be explained in more detail with reference to FIG. 6 again. The positive electrode active material of the present disclosure includes first particles PTC1 and second particles PTC2. The first particles PTC1 and the second particles PTC2 in the positive electrode active material of the present disclosure are mixed together in a weight ratio of about 80:20 to about 60:40. In embodiments, the first particles PTC1 and the second particles PTC2 in the positive electrode active material may be mixed together in a weight ratio of about 75:25 to about 65:35. If the mixing ratio of the first particles PTC1 and the second particles PTC2 in the positive electrode active material is within the above range, the pellet density of the positive electrode active material may increase, lifetime characteristics at a high voltage and high temperature may be excellent, and capacity per volume may increase.

A rechargeable lithium battery including the positive electrode active material of the present disclosure may exhibit improved low temperature properties. In embodiments, a rechargeable lithium battery including the positive electrode active material of the present disclosure may exhibit initial discharge capacity measured at about -20 °C of about 70% or more, or about 75% or more, or about 80% or more of the initial discharge capacity measured at room temperature.

**Method for Preparing Positive Electrode Active Material**

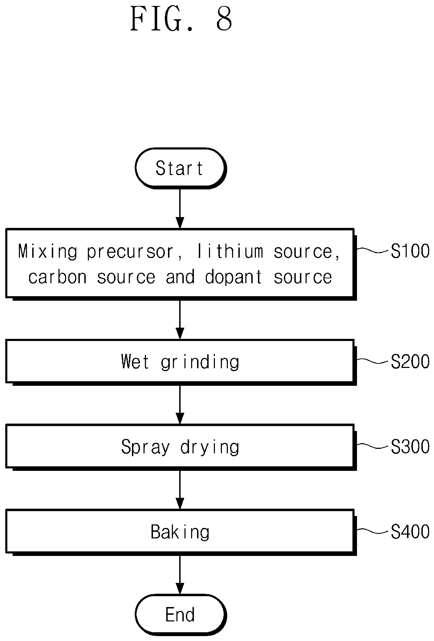

FIG. 8 is a flowchart illustrating a method for preparing a positive electrode active material according to some embodiments of the present disclosure. A method for preparing the first particles PTC1 according to some embodiments of the present disclosure will be explained in more detail with reference to FIG. 8.

An iron phosphate precursor, a lithium source, a carbon source and a dopant source may be added to a solvent and mixed together (S100). For example, the solvent may be water, ethanol and/or the like. The iron phosphate precursor may be a compound including both iron (Fe) and phosphorus (P), or a mixture of a compound including iron (Fe) and a compound including phosphorus (P). For example, the iron phosphate precursor may include $FePO_4 \cdot H_2O$, or a mixture of $FeSO_4$ and $H_3PO_4$.

The lithium source may include at least one selected from the group consisting of lithium oxide, lithium hydroxide, lithium chloride, lithium nitrate, lithium nitrite, lithium formate, lithium acetate, lithium oxalate, lithium carbonate, lithium phosphate, dilithium hydrogen phosphate, lithium dihydrogen phosphate and lithium citrate.

The carbon source may include at least one selected from the group consisting of glucose, sucrose, fructose, cellulose, starch, citric acid, polyacrylic acid, polyethylene glycol, and dopamine.

The dopant source may include an oxide including a dopant metal and/or a chloride including a dopant metal. For example, the dopant source may include at least one selected from the group consisting of titanium oxide, magnesium oxide, vanadium oxide and niobium oxide.

The mixture may be subjected to wet grinding (S200). The wet grinding may be performed using any suitable wet mill capable of controlling temperature. In embodiments, the wet grinding may use at least one selected from the group consisting of a bead mill, ball mill, attrition mill, apex mill, super mill and basket mill. Through the wet grinding process, the particles in the mixture may be ground to a fine size.

In an embodiment of the present disclosure, the wet grinding (S200) may be omitted. In embodiments, in order to maximize or increase the average particle diameter of the first particles PTC1 to be finally prepared, the wet grinding (S200) with respect to precursor particles may be omitted.

A dried mixture may be formed by removing the solvent from the mixture. In an embodiment of the present disclosure, the formation of the dried mixture may include performing spray drying of the mixture (S300). The spray drying may use any suitable spray drying device. For example, the spray drying may use at least one selected from an ultrasonic spray drying device, an air nozzle spray drying device, an ultrasonic nozzle spray drying device, a filter expansion droplet generation device and a static spray drying device.

Fine particles in the size of the primary particles by the wet grinding process may be agglomerated with each other through the spray drying process to form secondary particles. Accordingly, by controlling the flow amount, flow rate, temperature, and retention time in the reactor of the carrier gas, and internal pressure in the spray drying process, the first particles PTC1 may be formed into a secondary particle form having a suitable or desired size.

In an embodiment, the mixture that is a target for spray drying may have the total solid content of about 20% to about 40%. The total solid content may mean a converted value to a percentage of the weight of solid materials (e.g., dried mixture) remain after evaporating the solvent on the basis of the total weight of the mixture (e.g., spray solution). In an embodiment, the spray solution may have a total solid content of about 30 wt%.

If total the solid content is less than about 20%, the average particle diameter of the first particles PTC1 may decrease, and defects of reducing productivity may occur. If the total solid content is greater than about 40%, control of the average particle diameter of the first particles PTC1 may become difficult, and deviation in the size of the first particles PTC1 may increase.

The spray solution according to embodiments may have a viscosity of about 1500 mPa·s to about 2500 mPa·s with the total solid content. For example, the spray solution may have a viscosity of about 2000 mPa·s.

In an embodiment, the spray drying may be performed at a temperature of about 100 °C to about 300 °C. The spray gas (for example, air) used in the spray drying may be injected at a first temperature and exhausted at a second temperature. For example, the first temperature may be about 200 °C to about 250 °C. The second temperature may be about 80 °C to about 150 °C.

The flow rate of the spray solution in the spray drying may be about 30 ml/min to about 80 ml/min. If the flow rate is less than about 30 ml/min, defects of a nozzle blocking phenomenon and productivity degradation may occur. If the flow rate is greater than about 80 ml/min, defects of incomplete drying of the mixture may occur due to moisture condensation in a spray drier. The injection pressure of the spray solution may be about 0.3 MPa to about 0.7 MPa. For example, the injection pressure of the spray solution may be about 0.5 MPa.

The dried mixture may be baked under an inert atmosphere (S400). The inert atmosphere may be a nitrogen atmosphere and/or an argon atmosphere. The temperature of the baking process may be about 500 °C to about 1000 °C, or about 600 °C to about 800 °C. The performance time of the baking process may be about 4 hours to about 20 hours, or about 6 hours to about 12 hours. Through the baking of the dried mixture, the first particles PTC1 including the compound represented by Chemical Formula 1 may be formed.

In the method for preparing the first particles PTC1 according to embodiments of the present disclosure, a carbon source may be introduced into an iron phosphate precursor, and a carbon coating layer may be uniformly (e.g., substantially uniformly) formed on the surface of the primary particles. Then, the primary particles NNP may be closely agglomerated through the spray drying to form dense secondary spherical particles (e.g., dense secondary generally spherical particles). As a result, the first particle PTC1 may include a stable carbon coating layer on the outside and inside of the first particle PTC1, and thus may have a relatively high carbon content. The conductivity (e.g., the electrical conductivity) of the positive electrode active material layer AML1 may be improved through the high carbon content of the first particles PTC1.

A method for preparing the second secondary particles PTC2_1 according to some embodiments of the present disclosure will be explained in more detail below. A high nickel-based precursor may be prepared. The high nickel-based precursor may include Ni of Chemical Formula 2. The Ni content may be greater than about 80 at% on the basis of the total content of metals in the high nickel-based precursor. In an embodiment, the high nickel-based precursor may further include Co and Mn.

In an embodiment, the high nickel-based precursor may be obtained through a co-precipitation method. For example, the co-precipitation method may include dissolving a transition metal raw material in a solvent such as distilled water, and continuously (e.g., substantially continuously) adding a solution of a transition metal salt together with a chelating agent and an alkaline aqueous solution to a reactor to cause precipitation. After collecting the precipitate in a slurry type, the slurry solution may be filtered and dried to obtain a high nickel-based precursor that is a metal composite oxide.

In embodiments of the present disclosure, the transition metal raw material may include a metal salt of Ni. The transition metal raw material may further include at least one salt of a metal among Co and Mn. The metal salt may include a sulfate, a nitrate, an acetate, a halide, a hydroxide and/or the like, and any one of the foregoing may be used as long as it is dissolved in a solvent without limitation. The transition metal raw material according to embodiments may include a nickel salt, a cobalt salt and a manganese salt. The transition metal raw material may be blended by controlling the molar ratio so that the high nickel-based precursor has a Ni content of about 80 at% or more.

The high nickel-based precursor and a lithium source may be mixed together in a set or certain ratio to form a mixture. For example, the high nickel-based precursor and the lithium source may be mixed together in a molar ratio of about 1:1. The lithium source may include at least one selected from the group consisting of lithium oxide, lithium hydroxide, lithium chloride, lithium nitrate, lithium nitrite, lithium formate, lithium acetate, lithium oxalate, lithium carbonate, lithium phosphate, dilithium hydrogen phosphate, lithium dihydrogen phosphate and lithium citrate.

After mixing the resultant mixture using a mixer at about 1500 rpm for about 5 minutes, the dried mixture may be baked under an $O_2$ atmosphere (S400). The temperature of a baking process may be about 500 °C to about 1000 °C, or about 600 °C to about 800 °C. The performance time of the baking process may be about 4 hours to about 20 hours, or about 6 hours to about 12 hours. Through the baking of the mixture, second secondary particles PTC2_1 including the compound represented by Chemical Formula 2 may be formed.

In an embodiment of the present disclosure, the baking process may be performed after additionally adding a melting agent to the mixture. The melting agent may be a compound including at least one metal selected from the group consisting of Zr, La, S and Nb. By using the melting agent, the second single particles PTC2_2 may be smoothly formed into a single particle form. In embodiments, the average particle diameter of the second single particles PTC2_2 may increase.

Through the baking process, second secondary particles PTC2_1 may be formed from the mixture including the high nickel-based precursor and the lithium source.

A coating process may be performed with respect to ground second secondary particles PTC2_1. In embodiments, the second secondary particles PTC2_1 and a coating raw material may be added to a solvent and mixed together. For example, the coating raw material may include cobalt and/or aluminium. After filtering and drying the second secondary particles PTC2_1, surface treatment may be performed on the second secondary particles PTC2_1. The surface treatment may include a heating process under an oxidizing atmosphere such as air and/or oxygen. The surface treatment may be performed at a temperature of about 500 °C to about 800 °C.

In another embodiment of the present disclosure, the coating process may include a dry coating process. For example, the second secondary particles PTC2_1 and the coating raw material may be put in a dry coating device and mixed together by stirring without a solvent. The surface treatment may be performed with respect to the dried mixture obtained.

A method for preparing the second single particles PTC2_2 according to some embodiments of the present disclosure will be explained in more detail below. A high nickel-based precursor may be prepared. The high nickel-based precursor may include Ni of Chemical Formula 2. The Ni content may be greater than about 80 at% on the basis of the total content of metals in the high nickel-based precursor. In an embodiment, the high nickel-based precursor may further include Co and Mn.

In an embodiment, the high nickel-based precursor may be obtained through a co-precipitation method. For example, the co-precipitation method may include dissolving a transition metal raw material in a solvent such as distilled water, and continuously (e.g., substantially continuously) adding a solution of a transition metal salt together with a chelating agent and an alkaline aqueous solution to a reactor to cause precipitation. After collecting the precipitate in a slurry type (e.g., in a slurry), the slurry solution may be filtered and dried to obtain a high nickel-based precursor that is a metal composite oxide.

In the present disclosure, the transition metal raw material may include a metal salt of Ni. The transition metal raw material may further include at least one salt of a metal among Co and Mn. The metal salt may include a sulfate, a nitrate, an acetate, a halide, a hydroxide and/or the like, and any one of may be used as long as it is dissolved in a solvent without limitation. The transition metal raw material according to embodiments may include a nickel salt, a cobalt salt and a manganese salt. The transition metal raw material may be blended by controlling the molar ratio so that the high nickel-based precursor has a Ni content of about 80 at% or more.

The high nickel-based precursor and a lithium source may be mixed together in a set or certain ratio to form a mixture. For example, the high nickel-based precursor and the lithium source may be mixed together in a molar ratio of about 1:1. The lithium source may include at least one selected from the group consisting of lithium oxide, lithium hydroxide, lithium chloride, lithium nitrate, lithium nitrite, lithium formate, lithium acetate, lithium oxalate, lithium carbonate, lithium phosphate, dilithium hydrogen phosphate, lithium dihydrogen phosphate and lithium citrate.

By removing the solvent from the resultant mixture, a dried mixture may be formed. The dried mixture may be baked. The temperature of a baking process may be about 700 °C to about 1000 °C or about 900 °C to about 1000 °C. The baking process may be performed under an oxidizing atmosphere such as air and/or oxygen. The heating time of the baking process may be about 10 hours to about 30 hours. In embodiments of the present disclosure, preliminary baking may be performed at about 150 °C to about 800 °C prior to the baking process.

In an embodiment of the present disclosure, the baking process may be performed after additionally adding a melting agent to the mixture. The melting agent may be a compound including at least one metal selected from the group consisting of Zr, La, S and Nb. By using the melting agent, the second single particles PTC2_2 may be smoothly formed into a single particle type (e.g., a single particle). In embodiments, the average particle diameter of the second single particles PTC2_2 may increase.

Through the baking process, second single particles PTC2_2 may be formed from the mixture including the high nickel-based precursor and the lithium source. A wet grinding process may be performed with respect to the synthesized second single particles PTC2_2.

A coating process may be performed with respect to the ground second single particles PTC2_2. In embodiments, the second single particles PTC2_2 and a coating raw material may be added to a solvent and mixed together. For example, the coating raw material may include cobalt and/or aluminium. After filtering and drying the second single particles PTC2_2, surface treatment may be performed on the second single particles PTC2_2. The surface treatment may include a heating process under an oxidizing atmosphere such as air and/or oxygen. The surface treatment may be performed at a temperature of about 500 °C to about 800 °C.

In embodiments of the present disclosure, the coating process may include a dry coating process. For example, the second single particles PTC2_2 and the coating raw material may be put in a dry coating device and mixed together by stirring without a solvent. The surface treatment may be performed with respect to the dried mixture obtained.

By mixing together the second secondary particles PTC2_1 and the second single particles PTC2_2, respectively prepared by the methods above, the second particles PTC2 according to the present disclosure may be prepared. The second secondary particles PTC2_1 and the second single particles PTC2_2 may be mixed together in a weight ratio of about 80:20 to about 60:40. In embodiments, the second secondary particles PTC2_1 and the second single particles PTC2_2 may be mixed together in a weight ratio of about 75:25 to about 65:35. If the mixing ratio of the second secondary particles PTC2_1 and the second single particles PTC2_2 of the second particles PTC2 is within the above range, the second single particles PTC2_2 having a small size may fill between the second secondary particles PTC2_1 having a large size to increase the pellet density and capacity per volume (mAh/cc) of the positive electrode active material and improve lifetime characteristics under a high voltage and low temperature.

By mixing together the first particles PTC1 and the second particles PTC2, respectively prepared by the above-described methods, the positive electrode active material according to embodiments of the present disclosure may be prepared. The first particles PTC1 and the second particles PTC2 may be mixed together in a weight ratio of about 80:20 to about 60:40. In embodiments, in the positive electrode active material, the first particles PTC1 and the second particles PTC2 may be mixed together in a weight ratio of about 75:25 to about 65:35. If the mixing ratio of the first particles PTC1 and the second particles PTC2 in the positive electrode active material is within the above range, the pellet density of the positive electrode active material may increase, lifetime characteristics at a high voltage and high temperature may be excellent, and capacity per volume may be improved.

Carbon element analysis according to embodiments of the present disclosure may be performed by an Elementar Micro Cube elemental analyzer. Embodiments of the operation method and conditions are as follows. About 1-2 mg of a sample was weighed in a tin cup, put in an automatic sampling tray, brought into a combustion tube via a ball valve, and burned at a combustion temperature of about 1000 °C. After that, the burned gas was reduced using reducing copper to form carbon dioxide. The carbon dioxide may be detected using a thermal conductivity detector (TCD).

In the method for measuring the carbon content according to embodiments of the present disclosure, scanning electron microscopy-energy dispersive X-ray spectroscopy (SEM-EDS) was performed with respect to the surface of the particles, and quantitative analysis was performed. As the method for measuring the carbon content, an inductively coupled plasma-mass spectrometry (ICP-MS), an inductively coupled plasma optical emission spectroscopy (ICP-OES) and/or the like may be used in addition to the SEM-EDS.

Hereinafter, embodiments of the present disclosure will be explained in more detail through Examples. However, the Examples are only illustrations for explaining embodiments of the present disclosure, and the scope of the present disclosure is not limited to the Examples below.

**Example 1**

**Preparation of First Particles**

An iron phosphate precursor of $Fe_1PO_4$, lithium carbonate and titanium dioxide were mixed together in a molar ratio of about 1:1.03:0.002. To the resultant mixture, 10 wt% of glucose was added. The mixture that was a slurry was spray dried under a spray pressure of about 0.5 MPa and temperature conditions of about 230 °C for evaporation drying. The dried mixture was baked under a nitrogen atmosphere at about 750 °C for about 10 hours to obtain first particles in a secondary particle form. The average particle diameter ($D_{50}$) of the secondary particles was about 3 $\mu$m to about 10 $\mu$m, the average size, i.e., the minimum particle diameter of the primary particles in the first particles, was about 100 nm to about 200 nm, and the maximum particle diameter of the first particles was about 10 $\mu$m or more.

**Preparation of Second particles**

A high nickel-based precursor was prepared using a co-precipitation method. Particularly, nickel sulfate ($NiSO_4 \cdot 6H_2O$), cobalt sulfate ($CoSO_4 \cdot 7H_2O$) and aluminium sulfate ($Al_2(SO_4)_3 \cdot 18H_2O$) in a molar ratio of about 88:10:2 as the raw materials of a nickel-based metal hydroxide were dissolved in distilled water as a solvent to prepare a metal raw material mixture. The metal raw material mixture, ammonia water and sodium hydroxide were put in a reactor and reacted. A slurry solution in the reactor was filtered and washed with distilled water having high purity. The washed material was dried in a hot air oven at about 210 °C for about 24 hours to obtain a large size precursor ($Ni_{0.88}Co_{0.10}Al_{0.02}(OH)_2$) powder having an average particle diameter of about 14 $\mu$m.

A high nickel-based precursor and anhydrous lithium hydroxide (LiOH) were dry mixed together using a Henschel mixer. The mixing was performed so that the molar ratio of lithium and a transition metal was about 1:1.

The transition metal means the total sum of transition metals (Ni+Co+Al) included in the high nickel-based precursor. A melting agent was additionally added to the resultant mixture and heat treatment (i.e., baking process) was performed under an oxygen atmosphere at about 750 °C for about 15 hours to synthesize second particles as the high nickel-based positive electrode active material. The second particles were ground using a Jet mill at a pressure of about 3 bars.

The second particles were added to distilled water and washed. Aluminium oxide corresponding to about 3 mol% on the basis of the total sum of the transition metals of the third particles were added to perform aluminium coating. The third particles were dried at about 150 °C for about 12 hours and heated (i.e., surface treated) under an oxygen atmosphere at about 700 °C for about 15 hours.

A high nickel-based precursor was prepared using a co-precipitation method. Particularly, nickel sulfate ($NiSO_4 \cdot 6H_2O$), cobalt sulfate ($CoSO_4 \cdot 7H_2O$) and aluminium sulfate ($Al_2(SO_4)_3 \cdot 18H_2O$) in a molar ratio of about 88:10:2 as the raw materials of a nickel-based metal hydroxide were dissolved in distilled water as a solvent to prepare a metal raw material mixture. The metal raw material mixture, ammonia water and sodium hydroxide were put in a reactor and reacted. A slurry solution in the reactor was filtered and washed with distilled water having high purity. The washed material was dried in a hot air oven at a temperature, and for a time period, sufficient to obtain a small size precursor ($Ni_{0.88}Co_{0.10}Al_{0.02}(OH)_2$) powder having an average particle diameter of about 4 μm.

The second particles in a secondary particle form and the second particles in a single particle form thus prepared were mixed together in a weight ratio of about 8:2 to prepare bimodal second particles.

### Preparation of Positive Electrode Active Material

A positive electrode active material was prepared by mixing together the first particles and the second particles in a weight ratio of about 8:2.

### Manufacture of Positive Electrode

95 wt% of the positive electrode active material, 3 wt% of a polyvinylidene fluoride binder and 2 wt% of a Ketjen black conductive material were mixed together in an N-methylpyrrolidone solvent to prepare a positive electrode active material slurry. The positive electrode active material slurry was applied on an aluminium current collector, dried and rolled to manufacture a positive electrode.

### Fabrication of Rechargeable Lithium Battery

A coin half cell was formed by using the prepared positive electrode and a lithium metal counter electrode, interposing a polyethylene polypropylene multilayer separator therebetween, and injecting an electrolyte solution in which about 1.0 M $LiPF_6$ lithium salt was added to a mixture solvent of ethylene carbonate and diethyl carbonate in a volume ratio of about 50:50.

### Examples 2 to 9 and Comparative Examples 1 to 5

Positive electrode active materials, positive electrodes and batteries were prepared by substantially the same method as in Example 1 except for changing the weight ratio of the first particles, the weight ratio of the second secondary particles, and the weight ratio of the second single particles in the preparation of the positive electrode active material in Example 1, as in Table 1 below.

**Table 1**

| | First particles | Second particles | | |
|---|---|---|---|---|
| | Primary particles (%) | Secondary particles (%) | Single particles (%) | Total (%) |
| Example 1 | 80 | 16 | 4 | 20 |
| Example 2 | 80 | 14 | 6 | 20 |
| Example 3 | 80 | 12 | 8 | 20 |
| Example 4 | 70 | 24 | 6 | 30 |
| Example 5 | 70 | 21 | 9 | 30 |
| Example 6 | 70 | 18 | 12 | 30 |
| Example 7 | 60 | 32 | 8 | 40 |

(continued)

| | First particles | Second particles | | |
| --- | --- | --- | --- | --- |
| | Primary particles (%) | Secondary particles (%) | Single particles (%) | Total (%) |
| Example 8 | 60 | 28 | 12 | 40 |
| Example 9 | 60 | 24 | 16 | 40 |
| Comparative Example 1 | 100 | 0 | 0 | 0 |
| Comparative Example 2 | 0 | 100 | 0 | 100 |
| Comparative Example 3 | 0 | 0 | 100 | 100 |
| Comparative Example 4 | 90 | 7 | 3 | 10 |
| Comparative Example 5 | 50 | 35 | 15 | 50 |

**Evaluation Example 1: Analysis of the Surface of Positive Electrode Active Material**

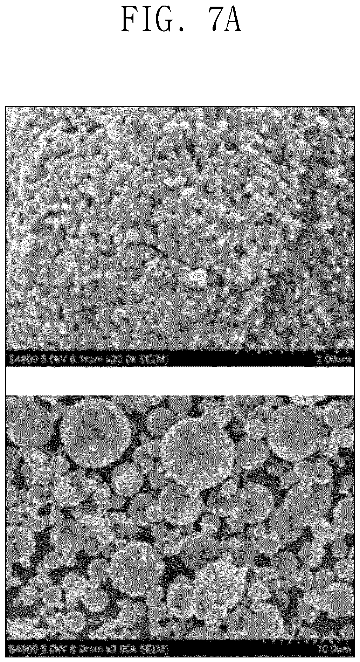

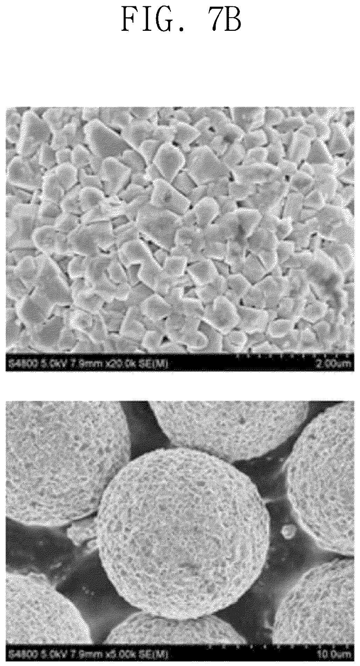

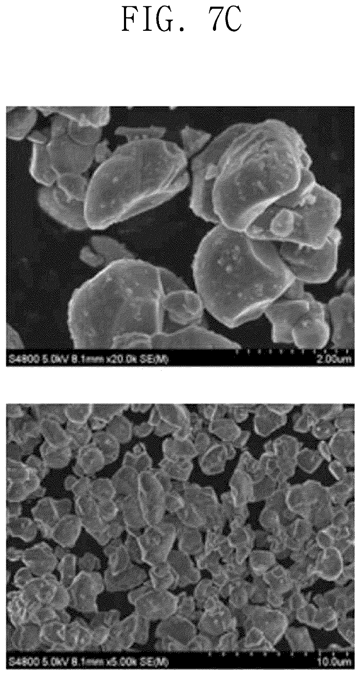

Scanning electron microscope (SEM) images of the first particles PTC1 of the positive electrode active material prepared in Example 1 are shown in FIG. 7A. The SEM images of the second secondary particles PTC2_1 of the positive electrode active material prepared in Example 1 are shown in FIG. 7B. The SEM images of the second single particles PTC2_2 of the positive electrode active material prepared in Example 1 are shown in FIG. 7C. Referring to FIG. 7A, it can be seen that the first particles according to an embodiment of the present disclosure have a spherical secondary particle form in which a plurality of primary particles are agglomerated. Referring to FIG. 7B, it can be seen that the second secondary particles according to an embodiment of the present disclosure have a spherical secondary particle form in which a plurality of primary particles are agglomerated. Referring to FIG. 7C, it can be seen that the second single particles according to an embodiment of the present disclosure have single particles or a form in which a plurality of single particles are attached to each other.

**Evaluation Example 2: Evaluation of Active Material**

The pellet density (PD) and capacity per volume (mAh/cc) of the positive electrode active materials of Examples 1 to 9 and Comparative Examples 1 to 5 were measured, and the results are shown in Table 2.

**Table 2**

| | Powder | |
| --- | --- | --- |
| | Pellet density (g/cc) | Capacity per volume (mAh/cc) |
| Example 1 | 2.69 | 457.8 |
| Example 2 | 2.71 | 461.6 |
| Example 3 | 2.66 | 453.4 |
| Example 4 | 2.78 | 485.8 |
| Example 5 | 2.8 | 489.8 |
| Example 6 | 2.76 | 483.4 |
| Example 7 | 2.84 | 509.2 |
| Example 8 | 2.86 | 513.5 |
| Example 9 | 2.82 | 507.0 |
| Comparative Example 1 | 2.45 | 394.7 |
| Comparative Example 2 | 3.1 | 636.4 |
| Comparative Example 3 | 3.15 | 666.9 |
| Comparative Example 4 | 2.64 | 437.5 |
| Comparative Example 5 | 2.92 | 537.7 |

Referring to Table 2, it can be seen that the positive electrode active materials according to Examples 1 to 9 of the present disclosure have better pellet density compared to the positive electrode active materials of Comparative Examples 1 and 4, in which the second particles were not mixed together, or relatively small second particles were mixed together compared to the Examples. In addition, it can be seen that the positive electrode active materials according to Examples 1 to 9 of the present disclosure have higher capacity per volume compared to the positive electrode active materials of Comparative Examples 1 and 4, in which the second particles were not mixed together, or relatively small second particles were mixed together compared to the Examples.

**Evaluation Example 3: Evaluation of Initial Capacity at Room Temperature**

The lithium secondary batteries fabricated in Examples 1 to 9 and Comparative Examples 1 to 5 were charged with a constant current of about 0.2 C at about 25 °C to an upper limit voltage of about 4.30 V, and then discharged with about 0.2 C to a final discharge voltage of about 3.0 V to measure initial discharge capacity, and in this case, the ratio of discharge capacity to charge capacity was calculated as efficiency, and the results are shown in Table 3 below.

**Evaluation Example 4: Evaluation of Initial Capacity at Low Temperature**

The batteries that underwent the initial charging and discharging in Evaluation Example 3 above were subjected to a charging and discharging experiment at about -20 °C to measure discharge capacity, and the ratio of the discharge capacity at about -20 °C to the initial discharge capacity was evaluated as low temperature lifetime characteristics, and the results are shown in Table 3 below.

**Evaluation Example 5: Evaluation of Lifetime Characteristics**

The lithium secondary batteries fabricated in Examples 1 to 9 and Comparative Examples 1 to 5 were repeatedly charged and discharged 50 times in substantially the same manner as in Evaluation Example 3, discharge capacity at the 50th was measured, and the ratio of the discharge capacity at the 50th to the initial discharge capacity was evaluated. The results are shown in Table 3 below.

**Table 3**

| | Evaluation of initial capacity at room temperature | | | Evaluation of initial capacity at low temperature | | Lifetime characte ristics (%, @50cy) |
|---|---|---|---|---|---|---|
| | Charge (mAh/g) | Discharg e (mAh/g) | Efficien cy (%) | Discharg e (mAh/g) | Efficien cy (%) | |
| Example 1 | 179.7 | 170.2 | 94.7 | 81.7 | 48.0 | 96.9 |
| Example 2 | 179.8 | 170.3 | 94.7 | 81.8 | 48.0 | 97.2 |
| Example 3 | 179.9 | 170.5 | 94.7 | 81.8 | 48.0 | 97.1 |
| Example 4 | 186.7 | 174.7 | 93.6 | 79.1 | 45.3 | 97.2 |
| Example 5 | 186.9 | 174.9 | 93.6 | 79.2 | 45.3 | 97.5 |
| Example 6 | 187.1 | 175.1 | 93.6 | 79.3 | 45.3 | 97.3 |
| Example 7 | 193.7 | 179.3 | 92.5 | 76.4 | 42.6 | 96.9 |
| Example 8 | 194.0 | 179.5 | 92.6 | 76.6 | 42.6 | 97.4 |
| Example 9 | 194.2 | 179.8 | 92.6 | 76.7 | 42.6 | 97.1 |
| Comparativ e Example 1 | 165.7 | 161.1 | 97.2 | 87.0 | 54.0 | 97.2 |
| Comparativ e Example 2 | 234.7 | 205.3 | 87.5 | 60.0 | 29.2 | 96 |
| Comparativ e Example 3 | 240.2 | 211.7 | 88.1 | 63.0 | 29.8 | 94.1 |
| Comparativ e Example 4 | 172.8 | 165.7 | 95.9 | 84.4 | 50.9 | 96.0 |
| Comparativ e Example 5 | 201.0 | 184.2 | 91.6 | 74.0 | 40.2 | 95.1 |

Referring to Table 3, it can be seen that Examples 1 to 9 have better effects in the initial capacity evaluation at low temperature and lifetime characteristics compared to Comparative Examples 2 and 3, in which the first particles were not mixed together.

Referring to Table 2, it can be seen that Example 2 has higher pellet density and capacity per volume compared to Examples 1 and 3. It can be seen that Example 5 has higher pellet density and capacity per volume compared to Examples 4 and 6. It can be seen that Example 8 has higher pellet density and capacity per volume compared to Examples 7 and 9.

Referring to Table 3, it can be seen that Example 2 has better lifetime characteristics compared to Examples 1 and 3. It can be seen that Example 5 has better lifetime characteristics compared to Examples 4 and 6. It can be seen that Example 8 has better lifetime characteristics compared to Examples 7 and 9.

A positive electrode active material according to embodiments of the present disclosure may have improved mixture density, capacity and energy density by mixing layered second particles that are several micrometers in size together with the base of olivine-based first particles that are several hundreds of nanometers in size. A positive electrode active material layer according to embodiments of the present disclosure may be smoothly attached to a positive electrode current collector even with a relatively small amount of a binder. A rechargeable lithium battery according to the present disclosure may have a relatively high average voltage.

Although embodiments of the present disclosure have been described, it is understood that the present disclosure should not be limited to these embodiments but various changes and modifications can be made by one having ordinary skill in the art within the scope of the present disclosure as hereinafter claimed.

Certain embodiments are set out in the following clauses:

Clause 1. A positive electrode active material, comprising: first particles comprising a compound represented by the following Chemical Formula 1; and second particles comprising a compound represented by the following Chemical Formula 2, wherein the first particles and the second particles are included in a weight ratio of about 80:20 to about 60:40;

Chemical Formula 1 $\quad\quad Li_{a1}Fe_{x1}B_{y1}PO_{4-b1}$

in Chemical Formula 1, $0.8 \leq a1 \leq 1.2$, $0.9 \leq x1 \leq 1.0$, $0.001 \leq y1 \leq 0.05$, $0 \leq b1 \leq 0.05$ (e.g., $0 < b1 \leq 0.05$), $x1 + y1 = 1$, and B is at least one element selected from the group consisting of Ti, Mg, V and Nb,

Chemical Formula 2 $\quad\quad Li_{a2}Ni_{x2}Co_{y2}Al_{z2}O_{2-b2}$

in Chemical Formula 2, $0.8 \leq a2 \leq 1.2$, $0.8 \leq x2 \leq 0.95$, $0.02 \leq y2 \leq 0.1$, $0.001 \leq z2 \leq 0.1$, $0 \leq b2 \leq 0.05$ (e.g., $0 < b2 \leq 0.05$), and $x2 + y2 + z2 = 1$.

Clause 2. The positive electrode active material of Clause 1, wherein the first particles have a polycrystal form.

Clause 3. The positive electrode active material of Clause 1 or Clause 2, comprising a plurality of first primary particles that are agglomerated with each other.

Clause 4. The positive electrode active material of any preceding Clause, wherein the first particles comprise a first coating layer comprising carbon, and the carbon content in the first particles is about 1.5 wt% to about 10 wt%.

Clause 5. The positive electrode active material of any preceding Clause, wherein a span value of the first particles, analyzed by a particle size analyzer, is about 0.3 to about 0.75.

**Claims**

1. A positive electrode active material, comprising:

   first particles comprising a compound represented by the following Chemical Formula 1; and
   second particles comprising a compound represented by the following Chemical Formula 2,
   wherein the first particles and the second particles are included in a weight ratio of about 80:20 to about 60:40:

   Chemical Formula 1 $\quad\quad Li_{a1}Fe_{x1}B_{y1}PO_{4-b1}$

   in Chemical Formula 1, $0.8 \leq a1 \leq 1.2$, $0.9 \leq x1 \leq 1.0$, $0.001 \leq y1 \leq 0.05$, $0 \leq b1 \leq 0.05$, $x1 + y1 = 1$, and B is at least one element selected from the group consisting of Ti, Mg, V and Nb,

   Chemical Formula 2 $\quad\quad Li_{a2}Ni_{x2}Co_{y2}Al_{z2}O_{2-b2}$

   in Chemical Formula 2, $0.8 \leq a2 \leq 1.2$, $0.8 \leq x2 \leq 0.95$, $0.02 \leq y2 \leq 0.1$, $0.001 \leq z2 \leq 0.1$, $0 \leq b2 \leq 0.05$, and $x2 + y2 + z2 = 1$.

2. The positive electrode active material as claimed in claim 1, wherein an average particle diameter of the first particles is about 3 $\mu$m to about 10 $\mu$m.

3. The positive electrode active material as claimed in claim 1 or claim 2, wherein a minimum particle diameter of the first particles is about 50 nm to about 200 nm.

4. The positive electrode active material as claimed in any preceding claim,

   wherein B is a dopant doped in the first particles,
   B is Ti, and
   the doped content of Ti in the first particles is about 500 ppm to about 3,000 ppm.

5. The positive electrode active material as claimed in any preceding claim, wherein a porosity of the first particles is about 20% to about 30%.

6. The positive electrode active material as claimed in any preceding claim, wherein the second particles comprise second secondary particles in a secondary particle form of polycrystal and second single particles in a single particle form.

7. The positive electrode active material as claimed in claim 6, wherein the second secondary particles and the second single particles are included in a weight ratio of about 80:20 to about 60:40 on the basis of about 100 parts by weight of the second particles.

8. The positive electrode active material as claimed in claim 6 or claim 7, wherein an average particle diameter of the second secondary particles is about 10 $\mu$m to about 18 $\mu$m.

9. The positive electrode active material as claimed in any one of claims 6 to 8, wherein a minimum particle diameter of the second secondary particles is about 50 nm to about 200 nm.

10. The positive electrode active material as claimed in any one of claims 6 to 9, wherein an average particle diameter of the second single particles is about 3 $\mu$m to about 5 $\mu$m.

11. The positive electrode active material as claimed in any one of claims 6 to 10,

    wherein the second secondary particle comprises the compound represented by Chemical Formula 2 where $3<y2/z2<100$, and
    the Al content of the second secondary particles is about 3 mol% or less on the basis of about 100 mol% of the second secondary particles.

12. The positive electrode active material as claimed in any one of claims 6 to 11, wherein the second single particles comprise a compound represented by the following Chemical Formula 2-1:

    Chemical Formula 2-1 $\qquad Li_{a3}Ni_{x3}Co_{y3}Al_{z3}Mn_{c3}O_{2-b3}$

    in Chemical Formula 2-1, $0.9\leq a3\leq1.1$, $0.8\leq x3\leq0.97$, $0.1\leq y3\leq0.3$, $0.001\leq z3\leq0.05$, $0.01<c3<0.1$, $0\leq b3\leq0.1$, and $x3 + y3 + z3 + c3= 1$.

13. The positive electrode active material as claimed in any one of claims 6 to 12, wherein the Ni content included in the second secondary particles is equal to or greater than the Ni content included in the second single particles.

14. A method for preparing a positive electrode active material, the method comprising:

    preparing first particles;
    preparing second particles; and
    mixing together the first particles and the second particles in a weight ratio of about 80:20 to about 60:40,
    wherein the preparing of the first particles comprises:

    mixing together an iron phosphate precursor, a lithium source, a carbon source and a dopant source to form a first mixture;
drying the first mixture by spray drying; and
baking the dried first mixture,
the preparing of the second particles comprises:

mixing together second secondary particles and second single particles,
preparing of the second secondary particles comprises:

adding a nickel-based precursor and a lithium source to a solvent and mixing together to form a second secondary particle mixture;
drying the second secondary particle mixture by spray drying; and
baking the dried second secondary particle mixture, and
preparing of the second single particles comprises:

adding a nickel-based precursor and a lithium source to a solvent and mixing together to form a second single particle mixture;
wet grinding the second single particle mixture;
drying the second single particle mixture; and
baking the dried second single particle mixture.

15. A rechargeable lithium battery comprising the positive electrode active material as claimed in any one of claims 1 to 13.

# FIG. 1

ELL

Li$^+$

COL1 AML1     30     COL2 AML2

10     20

# FIG. 2

# FIG. 3

EP 4 651 221 A1

# FIG. 4

# FIG. 5

# FIG. 6

# FIG. 7A

# FIG. 7B

# FIG. 7C

# FIG. 8

```
        ┌─────────┐
        │  Start  │
        └─────────┘
             │
             ▼
┌──────────────────────────────────┐
│ Mixing precursor, lithium source,│────S100
│  carbon source and dopant source │
└──────────────────────────────────┘
             │
             ▼
┌──────────────────────────────────┐
│           Wet grinding           │────S200
└──────────────────────────────────┘
             │
             ▼
┌──────────────────────────────────┐
│           Spray drying           │────S300
└──────────────────────────────────┘
             │
             ▼
┌──────────────────────────────────┐
│             Baking               │────S400
└──────────────────────────────────┘
             │
             ▼
        ┌─────────┐
        │   End   │
        └─────────┘
```

Europäisches
Patentamt

European
Patent Office

Office européen
des brevets

# EUROPEAN SEARCH REPORT

**Application Number**

EP 25 16 8770

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 4 310 942 A1 (LG ENERGY SOLUTION LTD [KR]) 24 January 2024 (2024-01-24) * page 3, paragraph 0014 - page 14, paragraph 0113; claims 1-16; figures 1, 2; tables 1,2 * | 1-15 | INV. H01M4/131 H01M4/1391 H01M4/36 H01M4/505 H01M4/525 H01M4/58 H01M10/0525 ADD. H01M4/02 |
| X | CN 116 918 098 A (NINGDE CONTEMPORARY AMPEREX TECH CO LTD) 20 October 2023 (2023-10-20) * see citations of the US family document below * & US 2024/429371 A1 (XU XIAOFU [CN] ET AL) 26 December 2024 (2024-12-26) * page 4, paragraph 0061 - page 36, paragraph 0320; claims 1-20; figures 1-7; tables 1-8 * | 1-15 | |
| T | "A Basic Guide to Particle Characterization", Malvern Instruments Worldwide - White Paper, 2 May 2012 (2012-05-02), pages 1-26, XP055089322, Retrieved from the Internet: URL:http://golik.co.il/Data/ABasicGuidtoParticleCharacterization(2)_1962085150.pdf [retrieved on 2020-05-15] * the whole document * | 2,3,8-10 | |

**TECHNICAL FIELDS SEARCHED (IPC)**

H01M

The present search report has been drawn up for all claims

| Place of search | Date of completion of the search | Examiner |
|---|---|---|
| Munich | 6 October 2025 | Polisski, Sergej |

EPO FORM 1503 03.82 (P04C01)

## ANNEX TO THE EUROPEAN SEARCH REPORT
## ON EUROPEAN PATENT APPLICATION NO.

EP 25 16 8770

This annex lists the patent family members relating to the patent documents cited in the above-mentioned European search report.
The members are as contained in the European Patent Office EDP file on
The European Patent Office is in no way liable for these particulars which are merely given for the purpose of information.

06-10-2025

| Patent document cited in search report | | Publication date | Patent family member(s) | | Publication date |
|---|---|---|---|---|---|
| EP 4310942 | A1 | 24-01-2024 | CN | 117280486 A | 22-12-2023 |
| | | | EP | 4310942 A1 | 24-01-2024 |
| | | | JP | 7703687 B2 | 07-07-2025 |
| | | | JP | 2024516988 A | 18-04-2024 |
| | | | KR | 20230146881 A | 20-10-2023 |
| | | | US | 2024250259 A1 | 25-07-2024 |
| | | | WO | 2023200082 A1 | 19-10-2023 |
| CN 116918098 | A | 20-10-2023 | CN | 116918098 A | 20-10-2023 |
| | | | EP | 4546454 A1 | 30-04-2025 |
| | | | JP | 7634789 B2 | 28-02-2025 |
| | | | JP | 2025503022 A | 30-01-2025 |
| | | | KR | 20240134402 A | 09-09-2024 |
| | | | US | 2024429371 A1 | 26-12-2024 |
| | | | WO | 2024011596 A1 | 18-01-2024 |

EPO FORM P0459

For more details about this annex : see Official Journal of the European Patent Office, No. 12/82